# EUROPÄISCHE PATENTSCHRIFT

(11) **EP 0 729 160 B1**
(45) Veröffentlichungstag und Bekanntmachung des Hinweises auf die Patenterteilung: **26.05.1999**
(21) Anmeldenummer: 96102410.6
(22) Anmeldetag: 17.02.1996
(51) Int. Cl.: H01F 38/42, H02M 7/10

(54) **Hochspannungstransformator für einen Fernsehempfänger**
High voltage transformer for a television receiver
Transformateur haute tension pour un récepteur de télévision

(30) Priorität: 27.02.1995 DE 19506719; 23.11.1995 DE 19543673
(43) Veröffentlichungstag der Anmeldung: 28.08.1996
(73) Patentinhaber: DEUTSCHE THOMSON-BRANDT GMBH, 78048 Villingen-Schwenningen (DE)
(72) Erfinder: Goseberg, Walter, 30457 Hannover (DE)

(56) Entgegenhaltungen:
- EP-A- 0 350 767
- EP-A- 0 351 583
- EP-A- 0 585 597
- DE-A- 1 904 757
- DE-A- 3 900 286
- US-A- 3 886 434

## Beschreibung

Die Erfindung geht aus von einem Hochspannungstransformator für einen Fernsehempfänger gemäß dem Oberbegriff des Anspruchs 1. Die darin genannten Hilfswicklungen dienen zur Erzeugung von zusätzlichen Betriebsspannungen, z.B. für einen Videoverstärker, die Heizung der Bildröhre, sonstige Vorspannungen oder Impulse für Phasenvergleichsschaltungen. Die Amplitude der von einer Hilfswicklung erzeugten Betriebsspannung muß in vielen Fällen besonders genau eingehalten werden, insbesondere bei der Spannung zum Heizen der Bildröhre. Diese genaue Einhaltung der Amplitude bereitet in der Praxis oft Schwierigkeiten, wenn die Anzahl der Windungen einer Hilfswicklung gering ist. Dabei liefern z.B. drei Windungen eine zu geringe und vier Windungen schon eine zu hohe Betriebsspannung. Die Freiheitsgrade für die Erzielung einer Betriebsspannung mit einer gewünschten Amplitude sind daher bei einem derartigen Transformator relativ begrenzt.

Aus der US 3,886,434 ist ein Hochspannungstransformator für einen Fernsehempfänger nach dem Oberbegriff des Anspruchs 1 bekannt, bei dem eine Sekundärwicklung, ebenso wie die Primärwicklung und die Hochspannungswicklung, in zwei Wicklungen unterteilt ist. Diese Teilwicklungen sind in zwei Kammern um zwei Kernhälften symmetrisch zueinander angeordnet. Aus der EP-A-0 350 762 ist ein Transformator für ein Schaltnetzteil bekannt, bei dem mehrere Sekundärwicklungen in Kammern angeordnet sind. Hierbei liegen die Audiowicklung und eine Teilwicklung einer Sekundärwicklung, z. B. zur Speisung einer Zeilenendstufe, über einem Luftspalt des Kerns. Die Audiowicklung ist hierdurch stark entkoppelt, so daß die hieraus gewonnene Betriebsspannung stark lastabhängig ist.

Der Erfindung liegt die Aufgabe zugrunde, den Hochspannungstransformator so auszubilden, daß ohne zusätzlichen Aufwand wie z.B. Stabilisierungsschaltungen die jeweils gewünschte Amplitude der von der Hilfswicklung erzeugten Betriebsspannung mit ausreichender Genauigkeit eingehalten werden kann. Außerdem werden durch die Erfindung Herstellung und Aufbau des gesamten Hochspannungstransformators vereinfacht.

Diese Aufgabe wird durch die im Anspruch 1 angegebene Erfindung gelöst.

Der Hochspannungstransformator für einen Fernsehempfänger nach der Erfindung weist einen Kern, einen Spulenkörper, eine Primärwicklung, eine Hochspannungswicklung und eine Hilfswicklung auf, wobei die Hilfswicklung in mehrere Teilwicklungen aufgeteilt ist, die in Reihe geschaltet sind und in verschiedenen Kammern liegen. Die Hilfswicklung dient zur Erzeugung einer Heizspannung für eine Bildröhre, die Wicklungen liegen in mehreren in Axialrichtung des Kerns nebeneinander liegenden Kammern des Spulenkörpers, eine der Kammern liegt im Bereich des Luftspaltes eines U/I-Kerns oder eines U/U-Kerns mit deutlich unterschiedlich langen parallelen Schenkeln der beiden U-Kernhälften und eine andere Kammer außerhalb des Bereichs des Luftspalts. Die Windungszahlen der Teilwicklungen sind den unterschiedlichen Kopplungswerten dieser Teilwicklungen entsprechend auf die eine Kammer im Bereich des Luftspalts und auf die andere Kammer außerhalb des Bereichs des Luftspalts verteilt.

Die Erfindung beruht auf folgender Erkenntnis. Eine Teilwicklung in einer über dem Luftspalt liegenden Kammer hat eine nennenswert geringere Kopplung als eine Teilwicklung außerhalb des Bereichs des Luftspaltes. Wenn jetzt eine Teilwicklung einer Kammer außerhalb des Luftspaltes mit einer hohen Kopplung und eine Teilwicklung in einer Kammer über dem Luftspalt mit geringerer Kopplung in Reihe geschaltet sind, gibt es eine erhöhte Vielfalt in der Amplitude der von der Reihenschaltung der Teilwicklungen erzeugten Betriebsspannung. Eine Betriebsspannung läßt sich dann mit einer Genauigkeit von etwa 100 mV einhalten. Wenn die Hilfswicklungen durchgehend gewickelt sind, wird dadurch auch die Anzahl der Anschlußstifte am Hochspannungstransformator, der sogenannten Pins, herabgesetzt. Auch können durch die definierte Lage der Teilwicklungen in getrennten Kammern bei einer Wicklung mit mehreren parallel gewickelten Drähten die Ausgleichsströme, die sogenannten circulating currents, verringert werden.

Die Teilwicklungen können auch in mehr als zwei getrennten Kammern liegen, von denen dann einige außerhalb des Bereiches des Luftspaltes liegen und eine hohe Kopplung haben, während andere über dem Luftspalt oder in der Nähe des Luftspaltes liegen und eine deutlich geringere Kopplung aufweisen.

Vorzugsweise sind die Hilfswicklung und/oder die Primärwicklung des Transformators mehrdrähtig gewickelt, wobei die Wicklung aus mehreren Drähten bestehen kann, die mit einer hohen Steigung verdrillt sind. Es können auch Teilwicklungen einer Hilfswicklung mit entgegengesetzter Wicklungsrichtung gewickelt sein.

Eine Weiterbildung der Erfindung besteht im folgendem: Es ist bekannt, die Betriebsspannung für den Videoverstärker durch Gleichrichtung der Impulsspannung am Hochspannungstransformator zu gewinnen. Der Gleichrichter für die Erzeugung dieser Betriebsspannung wird durch den Zeilenrücklaufimpuls während dessen Impulsspitze kurzzeitig leitend, um den Ladekondensator der Gleichrichterschaltung nachzuladen. Dabei kommt es zu einem relativ scharfen und harten Ein- und Ausschalten zu Beginn bzw. am Ende der Impulsspitze. Durch diese harten Schaltstöße wird die Hochspannungswicklung auf ihrer oder ihren Resonanzfrequenzen in unerwünschter Weise zu Schwingungen angeregt. Dadurch kommt es zu einer unerwünschten Beeinflussung der Hochspannung, insbesondere zu einer Vergrößerung des Innenwiderstandes. Außerdem können dadurch unerwünscht hohe Spannungsspitzen an dem Schalttransistor der Zeilenendstufe auftreten. Derartige unerwünschte Stromstöße können durch einen Widerstand oder eine Induktivität in Reihe zum Gleichrichter der Gleichrichterschaltung verringert werden. Derartige zusätzliche Bauteile sind jedoch wegen der relativ hohen Ströme teuer. Gemäß der genannten Weiterbildung liegt eine Hilfswicklung zur Erzeugung der Betriebsspannung für den Videoverstärker in einer Kammer des Hochspannungstransformators im Bereich des Luftspalts, so daß der Kopplungswert nennenswert geringer ist als der Kopplungswert der die Primär-und Hochspannungswicklung enthaltenden Kammer. Der geringe Kopplungswert bedeutet eine erhöhte Streuinduktivität. Diese Streuinduktivität liegt im Ersatzschaltbild in Reihe zu dem Gleichrichter zur Erzeugung der Betriebsspannung für den Videoverstärker und verringert dadurch unerwünschte Stromstöße. Die durch die geringere Kopplung gebildete erhöhte Streuinduktivität der Hilfswicklung in der Kammer über dem Luftspalt wird somit in vorteilhafter Weise ausgenutzt, den unerwünschten Einfluß der Gleichrichterschaltung zur Erzeugung der Betriebsspannung für den Videoverstärker auf den Hochspannungstransformator ohne zusätzliche Bauteile zu verringern. Vorzugsweise liegt die genannte Hilfswicklung in einer Kammer am Ende des Spulenkörpers im Bereich des Luftspaltes des Kerns.

Die Erfindung wird im folgenden anhand der Zeichnung erläutert.
Darin zeigen:
- Fig. 1: den Aufbau eines erfindungsgemäßen Hochspannungstransformators für einen Fernsehempfänger und
- Fig. 2: das Schaltbild für den in Fig. 1 dargestellten Transformator.

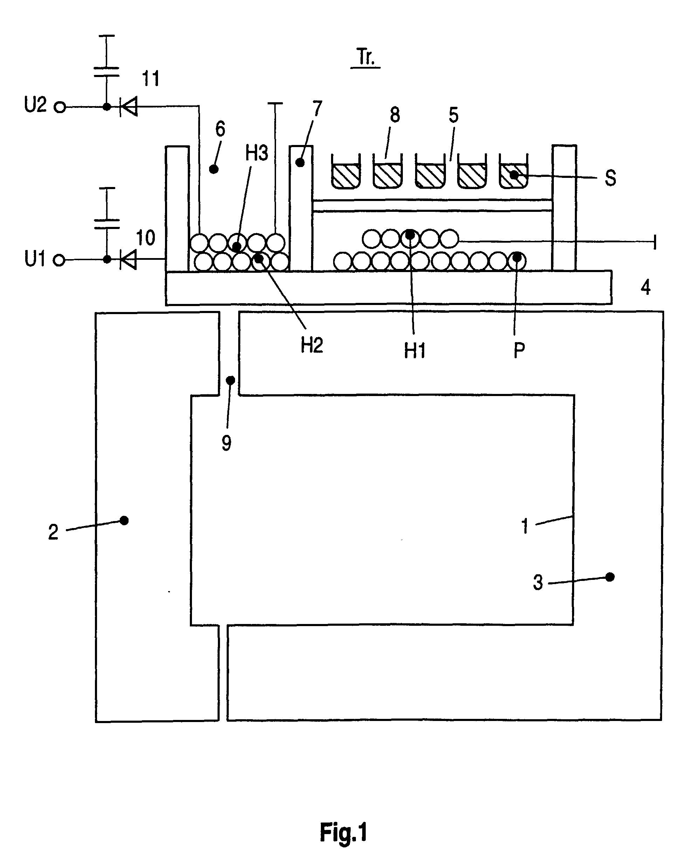

Fig. 1 zeigt den Hochspannungstransformator Tr zur Erzeugung der Hochspannung in einem Fernsehempfänger. Dargestellt sind der Ferritkern 1 mit einer I-förmigen Kernhälfte 2 und einer U-förmigen Kernhälfte 3 sowie ein Spulenkörper 4 mit zwei in Axialrichtung nebeneinander liegenden Kammern 5, 6, die durch eine Kammerwand 7 voneinander getrennt sind. Am Grund der Kammer 5 liegt die Primärwicklung P und darüber die Teilwicklung H1 einer Hilfswicklung. In einer Vielzahl von schmalen Kammern 8 liegen Teilwicklungen S der Hochspannungswicklung, die nach dem Diodensplitprinzip geschaltet sind.

Eine zweite Teilwicklung H2 der Hilfswicklung H, die mit der ersten Teilwicklung H1 in Reihe geschaltet ist, liegt in der Kammer 6, die über dem Luftspalt 9 des Kerns 1 zwischen den Kernhälften 2, 3 liegt. Die Reihenschaltung der Teilwicklungen H1, H2 liefert über die Gleichrichterschaltung 10 eine Betriebsspannung U1, z.B. die Heizspannung für die Bildröhre, eine Betriebsspannung für einen Verstärker oder dgl. In der Kammer 6 liegt eine zweite Hilfswicklung H3, die über die Gleichrichterschaltung 11 eine Betriebsspannung U2 für den Videosignalverstärker des Fernsehempfängers liefert.

Dadurch, daß die Kammer 6 mit den Wicklungen H2 und H3 über dem Luftspalt 9 liegt, ist wegen der dort größeren Streuung des Magnetflusses die Kopplung beträchtlich geringer als in der Kammer 5. Durch die unterschiedlichen Kopplungswerte für die Teilwicklungen H1 und H2 kann die beschriebene hohe Vielzahl von Amplituden für die Betriebsspannung U1 erreicht werden. Durch die ebenfalls geringere Kopplung für die Wicklung H3 wird indessen, wie beschrieben, der störende Einfluß der Gleichrichterschaltung 11 auf die Hochspannung beträchtlich verringert.

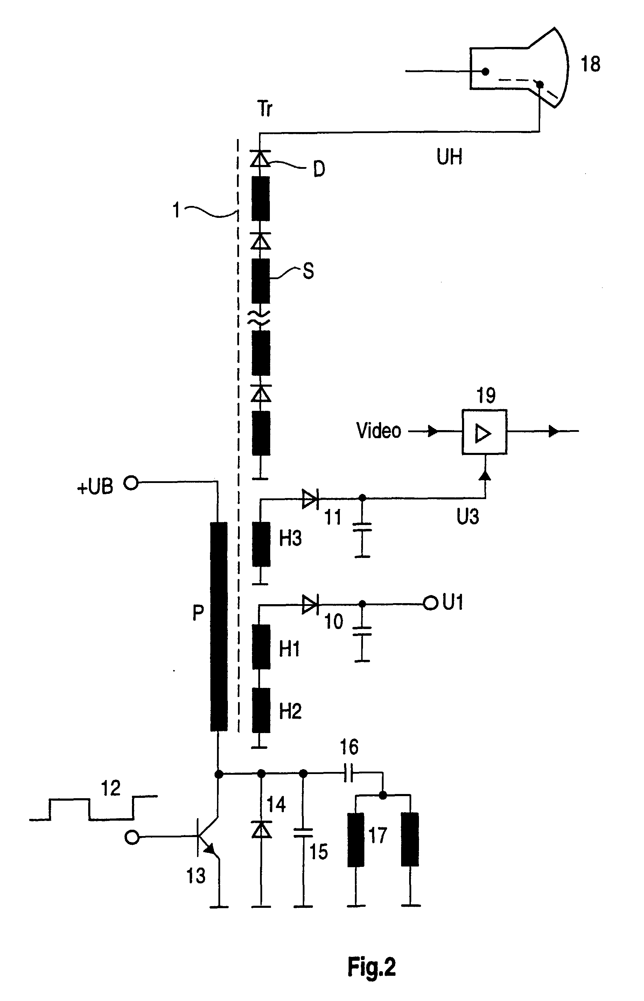

Fig. 2 zeigt den Aufbau der Zeilenendstufe mit dem Transformator Tr gemäß Fig. 1. Dargestellt sind der durch die zeilenfrequente Schaltspannung 12 gesteuerte Schalttransistor 13, die Rücklaufdidode 14, der Rücklaufkondensator 15, der Koppel- oder Tangenskondensator 16, die Zeilenablenkspulen 17, die an eine Betriebsspannung +UB angeschlossene Primärwicklung P des Transformator Tr, die Teilwicklungen H1, H2, die Gleichrichterschaltung 10, die Hilfswicklung H3, die Gleichrichterschaltung 11, vier Teilwicklungen S der Hochspannungswicklung, zwischen denen jeweils gleichsinning gepolte Dioden D liegen, sowie die mit der erzeugten Hochspannung UH gespeiste Bildröhre 18.

Die durch die Hilfswicklung H3 und die Gleichrichterschaltung 11 erzeugte Betriebsspannung U2 wird als Betriebsspannung dem Videoverstärker 19 im Weg des Videosignals zugeführt. Die Teilwicklung H2 hat durch ihre geometrische Lage gemäß Fig. 1 eine wesentlich geringere Kopplung als die Teilwicklung H1, wodurch die hohe Vielfalt von erzielbaren Amplitudenwerten für die Spannung U1 erzielt wird.

Bei dem beschriebenen Transformator ist es bekannt, die Hochspannungswicklung auf ungeradzahlige Harmonische, insbesondere die 9., 11., 13., 15. Harmonische, der Frequenz der Rücklaufschwingung abzustimmen. Durch diese Abstimmung kann die Form des zu Erzeugung der Hochspannung dienenden Rücklaufimpulses an der Hochspannungswicklung beeinflußt und der Innenwiderstand der Hochspannungsquelle verringert werden.

Bedingt durch diese Abstimmung entstehen in dem Rücklaufimpuls am Transformator, insbesondere an der Hochspannungswicklung, Harmonische der Grundwelle der Rücklaufschwingung. Der ideale Impuls in Form einer Sinushalbwelle während des Rücklaufs ist dabei sowohl während des Rücklaufes als auch während des Hinlaufes überlagert von Störschwingungen, z.B. im Bereich von 200 - 500 kHz. Diese Störschwingungen erhöhen die Verlustleistung des Transformators, können eine Störstrahlung und damit eine Beeinträchtigung benachbarter Schaltungen hervorrufen, den Innenwiderstand der Hochspannungsquelle erhöhen und auch Störmuster im Bild in Form sogenannter "Gardinen" verursachen. Es ist daher notwendig, diese Störschwingungen, die auch als "ringing" bezeichnet werden, zu dämpfen.

Einer anderen Weiterbildung der Erfindung liegt die Aufgabe zugrunde, den Hochspannungstransformator ohne zusätzliche Mittel konstruktiv so auszubilden, daß diese Störschwingungen ausreichend gedämpft werden. Diese Aufgabe wird durch die im Anspruch 7 angegebene Weiterbildung gelöst. Vorteilhafte Ausgestaltungen dieser Weiterbildung sind in den Ansprüchen 8-9 angegeben.

Gemäß dieser Weiterbildung ist somit eine erste Hilfswicklung in der ersten Kammer und die zweiten Hilfswicklung in der zweiten Kammer angeordnet, und ihre Windungszahlen sind so bemessen, daß die Amplituden der in den beiden Hilfswicklungen erzeugten Grundwellen des Rücklaufimpulses annähernd gleich groß sind. Die Weiterbildung beruht auf folgenden Erkenntnissen und Überlegungen. Die erste Hilfswicklung, die zusammen mit der Primärwicklung in derselben Kammer des Spulenkörpers liegt, ist aufgrund ihrer engen Lage zur Primärwicklung fest mit dieser gekoppelt. Der Rücklaufimpuls an der Primärwicklung ist von den genannten Störschwingungen nicht überlagert, weil diese Störschwingungen in der Hochspannungswicklung erzeugt und im Primärkreis während des Hinlaufs durch die parallel zum Schalttransistor liegende, während des Hinlaufs leitende sogenannte Rücklaufdiode unterdrückt werden. An der Primärwicklung und an der ersten Hilfswicklung steht also nur die Grundwelle des Rücklaufimpulses ohne die Störschwingungen, also ein reines Nutzsignal.

Die zweite Hilfswicklung in der zweiten Kammer jedoch ist wesentlich weiter von der Primärwicklung entfernt und hat daher eine wesentlich geringere Kopplung mit der Primärwicklung. Aufgrund ihrer Verkopplung mit der Hochspannungswicklung entstehen an dieser zweiten Hilfswicklung die genannten Störschwingungen in ähnlicher Form wie an der Hochspannungswicklung selbst. Der Rücklaufimpuls an dieser zweiten Hilfswicklung ist also von den genannten Störschwingungen überlagert. Daraus ergibt sich nun die folgende vorteilhafte Wirkung:

Durch entsprechende Wahl der Windungszahl der ersten und zweiten Hilfswicklung hat die Grundwelle des Rücklaufimpulses, also der Halbsinus, an der ersten Hilfswicklung und an der zweiten Hilfswicklung gleiche Amplitude und sind auch zeitgleich. Für die Grundwelle fließt also in erwünschter Weise kein Ausgleichsstrom in der Parallelschaltung der beiden Hilfswicklungen. Das ist auch erwünscht, weil dieser Halbsinus, der als Nutzsignal betrachtet werden kann, nicht gedämpft werden soll.

Die genannten Störschwingungen indessen sind in dem Rücklaufimpuls an der ersten Hilfswicklung nicht vorhanden, in dem Rücklaufimpuls der zweiten Hilfswicklung jedoch vorhanden. Dadurch kommt es durch die Parallelschaltung der beiden Hilfswicklungen nur für diese Störschwingungen, also im höheren Frequenzbereich etwa ab 50 kHz, zu Ausgleichsströmen. Diese Ausgleichsströme indessen sind erwünscht und bewirken die angestrebte Dämpfung der Störschwingungen an dem Hochspannungstransformator.

Bei der Weiterbildung wird also die angestrebte Dämpfung der Störschwingungen ohne zusätzliche Mittel erreicht, nämlich nur durch eine besondere Anordnung und Bemessung der beiden Hilfswicklungen. Die Hilfswicklungen erfüllen also in vorteilhafter Weise ohne Mehraufwand zwei Aufgaben, nämlich die Erzeugung einer Betriebs- oder Impulsspannung und die Dämpfung der Störschwingungen.

Vorzugsweise ist die Zahl der Windungen der zweiten Hilfswicklung in der zweiten Kammer etwas größer als die Zahl der Windungen der ersten Hilfswicklung in der ersten Kammer. Das ist im allgemeinen notwendig, um trotz der geringeren Kopplung in der zweiten Kammer eine gleiche Amplitude der Grundwelle der Rücklaufimpulse in den beiden Hilfswicklungen zu erzielen.

Die Windungszahl der beiden Hilfswicklungen liegt etwa im Bereich von 6 - 30. Wenn die Windungszahl wesentlich geringer wird, läßt sich die Forderung nach der gleichen Amplitude der Grundwelle nicht genau genug einhalten. Wenn die Windungszahl wesentlich größer ist, haben die angestrebten Ausgleichsströme in den Hilfswicklungen keinen für ausreichende Dämpfung erforderlichen Wert mehr.

Vorzugsweise liegt die zweite Kammer im Bereich des Luftspaltes des Kerns. Das ist vorteilhaft, weil dadurch die angestrebte und vorteilhaft ausgenutzte geringere Kopplung der zweiten Hilfswicklung mit der Primärwicklung gefördert wird.

Die Hilfswicklungen dienen vorzugsweise zur Erzeugung einer Betriebsspannung für einen Verstärker wie z.B. den ZF-Verstärker, Videoverstärker oder Tonverstärker, als Quelle für eine Impulsspannung oder auch zur Heizung der Bildröhre.

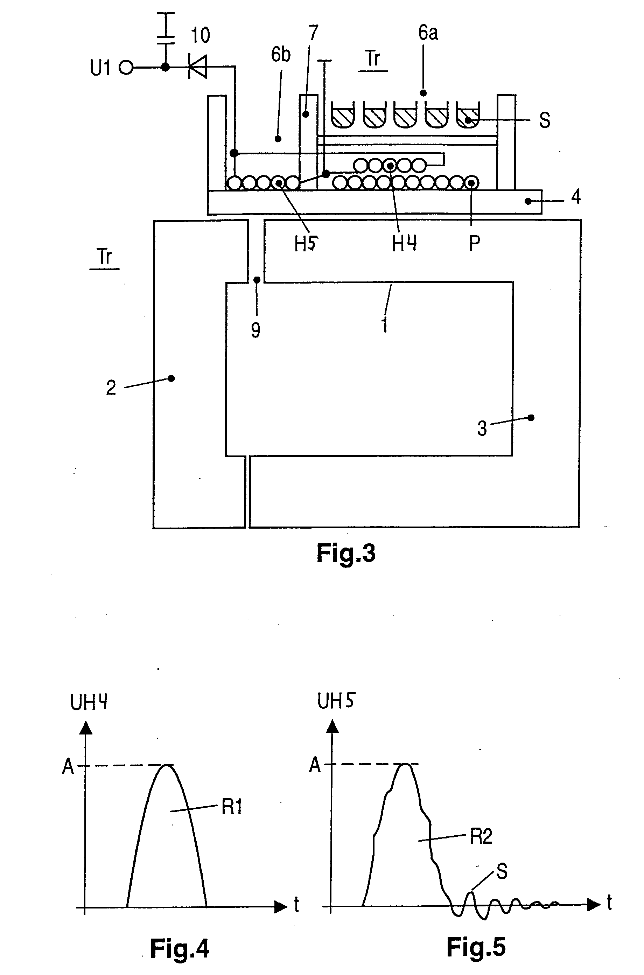

Die beschriebene Weiterbildung wird im folgenden anhand der Fig. 3 - 7 erläutert. Darin zeigen
- Fig. 3: einen Hochspannungstransformator für einen Fernsehempfänger gemäß der Weiterbildung,
- Fig. 4,5: den Rücklaufimpuls jeweils an der ersten und zweiten Hilfswicklung,

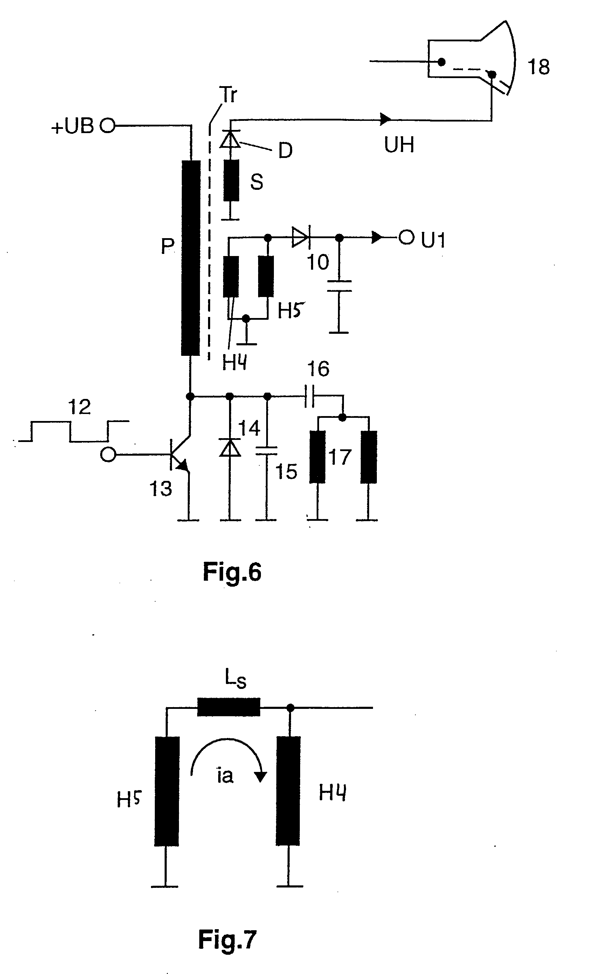

- Fig. 6: eine Zeilenablenkschaltung mit Hochspannungserzeugung mit einem Transformator gemäß Fig.3 und
- Fig. 7: ein Ersatzschaltbild für die beiden Hilfswicklungen.

Fig. 3 zeigt in vereinfachter Form den Aufbau des Hochspannungstransformators Tr. Dargestellt ist der Ferritkern 1 mit der etwa I-förmigen Kernhälfte 2 und der U-förmigen Kernhälfte 3 sowie dem Luftspalt 9. Der Kern 1 trägt den Spulenkörper 4. Der Spulenkörper 4 enthält eine erste Kammer 6a, in der die Primärwicklung P und die als Kammerwicklung ausgebildete Hochspannungswicklung S liegen. Axial versetzt zur ersten Kammer 6a enthält der Spulenkörper 4 eine zweite Kammer 6b, auch als Nebenkammer bezeichnet, die im Bereich des Luftspalts 9 liegt.

Der Spulenkörper 4 enthält außerdem zwei Hilfswicklungen H4 und H5, die parallel geschaltet sind und über die Gleichrichterschaltung 10 eine Betriebsspannung U1 liefern, z.B. für den ZF-Verstärker, den Videoverstärker, den Tonverstärker, eine Impulsspannung für eine Synchronisierschaltung oder auch die Heizspannung für die Bildröhre.

Anhand der Figuren 4 und 5 wird die zusätzliche Wirkung der Hilfswicklungen H4 und H5 zur Dämpfung der Störschwingungen erläutert. Die Hilfswicklung H4 ist durch ihre Lage unmittelbar über der Primärwicklung P fest mit dieser verkoppelt, und zwar wesentlich fester als mit der Hochspannungswicklung S. An der Primärwicklung P steht ein Rücklaufimpuls R1 in Form eines reinen Halbsinuns P ohne die genannten Störschwingungen, da die Störschwingungen nur in der Hochspannungswicklung erzeugt und an der Primärwicklung P außerdem während des Hinlaufs durch die parallel zum Schalttransistor der Zeilenendstufe liegende Rücklaufdiode unterdrückt werden. Durch die feste Kopplung zwischen der Primärwicklung P und der Hilfswicklung H4 hat somit der Rücklaufimpuls R1 an der Hilfswicklung H4 gemäß Fig.4 keine Störschwingungen und die Amplitude A.

Die Hilfswicklung H5 in der Kammer 6b ist wegen ihrer axial versetzten Lage zur Primärwicklung P wesentlich weniger fest mit der Primärwicklung P, jedoch nennenswert mit der Hochspannungswicklung S gekoppelt. Deshalb entstehen in dem Rücklaufimpuls R2 an der Hiflswicklung H5 gemäß Fig. 5 nennenswerte Störschwingungen N während des Beginns des Rücklaufes und während der Hinlaufs. Die Windungszahlen der Wicklungen H4, H5 sind derart gewählt, daß die Grundwelle in den beiden Rücklaufimpulsen R1, R2 gleich groß ist. Das bedeutet, daß für die Grundwelle, also das Nutzsignal, kein Ausgleichsstrom zwischen den Hilfswicklungen H4, H5 fließt. Für die Störschwingungen N fließt jedoch ein Ausgleichsstrom, weil diese Störschwingungen nur in dem Impuls R2 an der Wicklung H5 vorhanden sind. Dieser erwünschte Ausgleichsstrom bewirkt somit die gewünschte Dämpfung der Störschwingungen N. Auf die Betriebsspannung U1 hat diese für die Dämpfung der Störschwingungen vorteilhafte Wirkung keinen negativen Einfluß, weil derartige Störschwingungen ohnehin in der Gleichrichterschaltung 10 unterdrückt werden.

Fig. 6 zeigt eine Zeilenablenkschaltung mit Gewinnung der Hochspannung mit einem Transformator Tr gemäß Fig. 3. Dargestellt sind der durch die zeilenfrequente Schaltspannung 12 gesteuerte Schalttransistor 13, die Rücklaufdiode 14, der Rücklaufkondensator 15, der Koppel- oder Tangenskondensator 16, die Zeilenablenkspulen 17, die an eine Betriebsspannung +UB angeschlossene Primärwicklung P des Transformators Tr, die Hilfswicklungen H4, H5, die Gleichrichterschaltung 10 zur Erzeugung der Betriebsspannung U1, die Hochspannungswicklung S und der Hochspannungsgleichrichter D zur Erzeugung der Hochspannung UH für die Bildröhre 18. Die beiden parallel geschalteten Hilfswicklungen H4 und H5 dienen zur Erzeugung der Betriebsspannung U1 und zur Dämpfung der beschriebenen Störschwingungen N.

Fig. 7 zeigt ein Ersatzschaltbild für die Hilfswicklungen H4, H5. Durch die relativ lose Kopplung zwischen diesen beiden Wicklungen ist zwischen den Wicklungen H4, H5 die Streuinduktivität Ls wirksam. Die Streuinduktivität Ls ermöglicht, daß an der Hilfswicklung H5 die Störschwingungen N stehen, an der Hilfswicklung H4 jedoch nicht. Die beschriebene Wirkung läßt sich durch besondere Wahl der Windungszahlen für H4 und H5 erreichen. Wenn die Windungszahlen zu gering sind, ist es schwierig, die Forderung nach der gleichen Amplitude A der Grundwelle in den Rücklaufimpulsen R1, R2 einzuhalten. Wenn die Windungszahl zu groß ist, wird der Wert von Ls zu hoch, so daß die erzeugten und gewünschten Ausgleichsströme ia keine für die Dämpfung der Störschwingungen N ausreichende Amplitude haben. In der Praxis lassen sich die genannten Anforderungen mit einer Windungszahl zwischen 6 und 30 für H4 und H5 erzielen.

## Patentansprüche

1. Hochspannungstransformator für einen Fernsehempfänger mit einem Kern (1), einem Spulenkörper (4), einer Primärwicklung (P), einer Hochspannungswicklung (S) und einer Hilfswicklung, wobei die Hilfswicklung in mehrere Teilwicklungen (H1, H2) aufgeteilt ist, die in Reihe geschaltet sind und in verschiedenen Kammern (5, 6) liegen,
**gekennzeichnet durch,**
die Hilfswicklung dient zur Erzeugung einer Heizspannung für eine Bildröhre,
die Wicklungen liegen in mehreren in Axialrichtung des Kerns (1) nebeneinander liegenden Kammern (5, 6) des Spulenkörpers (4),
eine der Kammern (6) liegt im Bereich des Luftspaltes (9) eines U/I-Kerns (1) oder eines U/U-Kerns mit deutlich unterschiedlich langen parallelen Schenkeln der beiden U-Kernhälften, und eine andere Kammer (5) außerhalb des Bereichs des Luftspalts (9), und
die Windungszahlen der Teilwicklungen (H1, H2) sind den unterschiedlichen Kopplungswerten dieser Teilwicklungen (H1, H2) entsprechend auf die eine Kammer (6) im Bereich des Luftspalts (9) und auf die andere Kammer (5) außerhalb des Bereichs des Luftspalts (9) verteilt.

2. Transformator nach Anspruch 1, **dadurch gekennzeichnet,** daß Teilwicklungen der Hilfswicklung mit entgegengesetzter Wicklungsrichtung gewickelt sind.

3. Transformator nach Anspruch 1 oder 2, **dadurch gekennzeichnet,** daß die Teilwicklungen (H1, H2) in mehr als zwei getrennten Kammern liegen.

4. Transformator nach Anspruch 1, **dadurch gekennzeichnet,** daß eine zweite Hilfswicklung (H3) in einer im Bereich des Luftspalts (9) liegenden Kammer (6) zur Erzeugung der Betriebsspannung (U2) für einen Verstärker (19) für das Videosignal dient.

5. Transformator nach Anspruch 1 oder 2, **dadurch gekennzeichnet,** daß die Hilfswicklung und/oder die Primärwicklung (P) mehrtdrähtig gewickelt ist.

6. Transformator nach Anspruch 5, **dadurch gekennzeichnet,** daß die Wicklung aus mehreren Drähten besteht, die mit einer hohen Steigung verdrillt sind.

7. Hochspannungstransformator für einen Fernsehempfänger mit einem den Kern (1) umgebenden Spulenkörper (4) mit einer ersten Kammer (6a) mit der Primärwicklung (P) und der darüber liegenden Hochspannungswicklung (S), mit einer axial zur ersten versetzten zweiten Kammer (6b) und mit zwei parallel geschalteten Hilfswicklungen (H4, H5) zur Erzeugung einer Betriebs- oder Impulsspannung (U1), **dadurch gekennzeichnet,** daß die erste Hilfswicklung (H4) in der ersten Kammer (6a) und die zweite Hilfswicklung (H5) in der zweiten Kammer (6b) liegt, daß die erste Hilfswicklung (H4) durch ihre Lage unmittelbar über der Primärwicklung (P) mit dieser fest verkoppelt ist und die zweite Hilfswicklung (H5) aufgrund ihrer axial zur Primärwicklung versetzten Lage mit der Primärwicklung wesentlich weniger fest verkoppelt ist, daß die Zahl der Windungen der zweiten Hilfswicklung (H5) größer ist als die Zahl der Windungen der ersten Hilfswicklung (H4), so daß die Amplituden der in den beiden Hilfswicklungen erzeugten Grundwellen des Rücklaufsimpulses (R) annähernd gleich groß sind.

8. Transformator nach Anspruch 7, **dadurch gekennzeichnet,** daß daß die Windungszahl jeweils einer Hilfswicklung im Bereich von 6 - 30 liegt.

9. Transformator nach Anspruch 7 oder 8, **dadurch gekennzeichnet,** daß die zweite Kammer (6b) im Bereich des Luftspaltes (9) des Kerns (1) liegt.

10. Transformator nach Anspruch 7, 8 oder 9, **dadurch gekennzeichnet,** daß die Hilfswicklungen (H4, H5) zur Erzeugung einer Betriebsspannung (U1) für einen ZF-Verstärker, einen Videoverstärker, oder als Quelle für eine Impulsspannung dienen.

## Claims

1. High-voltage transformer for a television receiver including a core (1), a coil former (4), a primary winding (P), a high-voltage winding (S) and an auxiliary winding the auxiliary winding being split into a plurality of partial windings (H1, H2) which are connected in series and are located in different chambers (5, 6),
characterized by the following features:
the auxiliary winding is used for producing the heating voltage for a picture tube,
the windings are located in a plurality of chambers (5, 6) of the coil former (4) said chambers being located side by side in the axial direction of the core,
one of the chambers (6) is located in the region of the air gap (9) of an U/I-core (1) or of an U/U-core the values of the length of the parallel limbs of the U-core halves being considerably different and another chamber (5) is located outside the region of the air gap (9) and
the numbers of turns of the partial windings (H1, H2) are distributed to the one chamber (6) in the region of the air gap (9) and to the other chamber (5) outside the region of the air gap (9) corresponding to the different values of coupling of said partial windings (H1, H2).

2. Transformer according to claim 1, characterized in that partial windings of the auxiliary winding are wound in opposite winding directions.

3. Transformer according to claim 1 or 2, characterized in that the partial windings (H1, H2) are located in more than two separate chambers.

4. Transformer according to claim 1, characterized in that a second auxiliary winding (H3) in a chamber (6) which is located in the region of the air gap (9) is used to produce the operating voltage (U2) for an amplifier (19) for the video signal.

5. Transformer according to claim 1 or 2, characterized in that the auxiliary winding and/or the primary winding (P) are wound with stranded wires.

6. Transformer according to claim 5, characterized in that the winding comprises a plurality of wires which are twisted with a short pitch.

7. High-voltage transformer for a television receiver having a coil former (4) which surrounds the core (1), having a first chamber (6a) with the primary winding (P) and the high-voltage winding (S) located above it, having a second chamber (6b) which is offset axially with respect to the first, and having two parallel-connected auxiliary windings (H4, H5) in order to produce an operating voltage or pulsed voltage (U1), characterized in that the first auxiliary winding (H4) is located in the first chamber (6a) and the second auxiliary winding (H5) is located in the second chamber (6b) and that the first auxiliary winding (H4) is strongly coupled to the primary winding (P) due to ist position above the primary winding and the second auxiliary winding (H5) is coupled substantially less strongly to the primary winding due to ist position axial displaced to the primary winding and that the number of turns of the second auxiliary winding (H5) is higher than the number of turns of the first auxiliary winding (H4) such that the amplitudes of the fundamentals of the flyback pulse (R) produced in the two auxiliary windings are of approximately the same magnitude.

8. Transformer according to claim 7, characterized in that the number of turns of each auxiliary winding is approximately in the range from 6 to 30.

9. Transformer according to claim 7 or 8, characterized in that the second chamber (6b) is located in the region of the air gap (9) of the core (1).

10. Transformer according to claim 7, 8 or 9, characterized in that the auxiliary windings (H4, H5) are used for producing an operating voltage (U1) for an IF-amplifier, a video amplifier or as a source for a pulse voltage.

## Revendications

1. Transformateur à haute tension pour un récepteur de télévision présentant un noyau (1), un support de bobine (4), un enroulement primaire (P), un enroulement à haute tension (S) et un enroulement secondaire divisé en plusieurs enroulements partiels (H1, H2) montés en série et situés dans différentes chambres (5, 6), **caractérisé en ce que**
l'enroulement secondaire sert à la génération d'une tension de mise en température pour un tube image,
les enroulements se trouvent dans des chambres (5, 6) du support de bobine (4), situées côte à côte dans le sens axial du noyau (1),
une des chambres (6) se trouve dans la zone de l'entrefer (9) d'un noyau U/I (1) ou d'un noyau U/U dont les branches parallèles des deux moitiés de noyau U sont de longueurs nettement différentes, et une autre chambre (5) se trouve en dehors de la zone de l'entrefer (9), et
le nombre de spires des enroulements partiels (H1, H2) est réparti selon les différentes valeurs de couplage de ces enroulements partiels (H1, H2) entre la chambre (6) dans la zone de l'entrefer (9) et la chambre (5) en dehors de la zone de l'entrefer (9).

2. Transformateur conforme à la revendication 1, **caractérisé en ce que** des enroulements partiels de l'enroulement secondaire sont enroulés dans des directions inverses.

3. Transformateur conforme à la revendication 1 ou 2, **caractérisé en ce que** les enroulements partiels (H1, H2) se trouvent dans plus de deux chambres séparées.

4. Transformateur conforme à la revendication 1, **caractérisé en ce que** un deuxième enroulement secondaire (H3), dans une chambre (6) située dans la zone de l'entrefer (9), sert à la génération de la tension de service (U2) pour un amplificateur (19) pour le signal vidéo.

5. Transformateur conforme à la revendication 1 ou 2, **caractérisé en ce que** l'enroulement secondaire et/ou l'enroulement primaire (P) présentent un enroulement multifilaire.

6. Transformateur conforme à la revendication 5, caractérisé en ce que l'enroulement est composé de plusieurs fils torsadés avec un pas élevé.

7. Transformateur à haute tension pour un récepteur de télévision présentant un support de bobine (4) entourant le noyau (1), avec une première chambre (6a) contenant l'enroulement primaire (P) au dessus duquel se trouve l'enroulement à haute tension (S), avec une deuxième chambre (6b) décalée dans le sens axial par rapport à la première chambre et avec deux enroulements secondaires montés en parallèle (H4, H5) pour la génération d'une tension de service ou d'impulsion (U1), caractérisé en ce que le premier enroulement secondaire (H4) se trouve dans la première chambre (6a) et le deuxième enroulement secondaire (H5) dans la deuxième chambre (6b),
le premier enroulement secondaire (H4), du fait de sa situation directement au-dessus de l'enroulement primaire (P) est fermement couplé avec celui-ci et le deuxième enroulement secondaire (H5), en raison de sa situation décalée dans le sens axial par rapport à l'enroulement primaire, est nettement moins solidement couplé avec celui-ci,
le nombre de spires du deuxième enroulement secondaire (H5) est supérieur au nombre de spires du premier enroulement secondaire (H4), de sorte que les amplitudes des ondes fondamentales de l'impulsion de retour (R) générées dans les deux enroulements secondaires sont presque égales.

8. Transformateur conforme à la revendication 7, **caractérisé en ce que** le nombre de spires d'un enroulement secondaire se situe entre 6 et 30.

9. Transformateur conforme à la revendication 7 ou 8, **caractérisé en ce que** la deuxième chambre (6b) se situe dans la zone de l'entrefer (9) du noyau (1).

10. Transformateur conforme à la revendication 7, 8 ou 9, **caractérisé en ce que** les enroulements secondaires (H4, H5) servent à la génération d'une tension d'alimentation (U1) pour un amplificateur FI, un amplificateur du signal vidéo ou comme source pour une tension d'impulsion.
